# EUROPEAN PATENT APPLICATION

(11) **EP 4 817 906 A1**
(43) Date of publication of application: **07.10.2026**
(21) Application number: 26162660.0
(22) Date of filing: 05.03.2026
(51) Int. Cl.: B60H 1/00, B60H 1/32

(54) **THERMAL MANAGEMENT SYSTEMS AND METHODS FOR A VEHICLE**

(30) Priority: 20.03.2025 US 202519085212
(71) Applicant: Volvo Car Corporation, 405 31 Göteborg (SE)
(72) Inventor: NILSSON, Ulf, 405 31 GÖTEBORG (SE); NIELSEN, Filip, 405 31 GÖTEBORG (SE); JAMSHIDI, Hamed, 405 31 GÖTEBORG (SE); GROTTLING, Mikael, 405 31 GÖTEBORG (SE)
(74) Representative: Kransell & Wennborg KB

(57) **Abstract**

A thermal management system (100) for a vehicle, comprising:
a refrigerant loop (110) comprising a liquid cooled condenser (110a/114) and a coolant chiller (110b/118);
a coolant loop (112) comprising a hot circuit (112a) and a cold circuit (112b);
a first multi-way valve assembly (V1) coupling a heating, ventilation, and air conditioning (HVAC) system (102) comprising a first heat exchanger/heater (120) and a second heat exchanger/cooler (122) to the hot circuit and the cold circuit of the coolant loop;
a second multi-way valve assembly (V2) coupling a battery system (104), an electric drive (ED) system, and an ambient heat exchanger (108) to the hot circuit and the cold circuit of the coolant loop; and
a third multi-way valve assembly (V3) coupling the battery system, the electric drive system, and the ambient heat exchanger to one another.

## Description

### INTRODUCTION

The present disclosure relates generally to the automotive field. More particularly, the present disclosure relates to thermal management systems and methods for a vehicle, such as an electric vehicle (EV).

The thermal system contribution to energy consumption in EVs has resulted in an increased focus on complex heat pump systems to increase real world range. The current refrigerant used in such heat pump systems is a per or polyfluoroalkyl substance (PFAS) - a group of substances highly resistant to degradation. Due to this, these substances remain in the environment and have been identified to contaminate soil, ground water, and surface water. Legislation and potential future bans are expected to avoid the further accumulation of such substances.

Environmental impact and future restrictions/bans give rise to a need to look into alternative refrigerants, which in many cases requires the implementation of alternative thermal system and component solutions. Currently, the main options are considered to be CO2 and propane - with a hope that a blend can be found that does not require as extensive system and component changes as other alternatives.

Propane comes with its own challenges - due to its flammability, the thermal system solution needs to minimize the refrigerant charge and hence minimize the refrigerant system and component size. One solution realizing this is often referred to as a full secondary loop system (FSL). In a FSL system the refrigerant system is reduced in complexity and scope to consist of a compressor, a chiller, a condenser, and a control valve (or multiple control valves depending on the heating solution - a refrigerant lossy system may require an additional control valve) - avoiding refrigerant going into the heating, ventilation, and air conditioning (HVAC) system and front end cooling module. HVAC and front end cooling module heat exchange is instead handled by the coolant based thermal management system.

The present introduction is provided as illustrative environmental context only. It will be readily apparent to those of ordinary skill in the art that the principles and concepts of the present disclosure may be implemented in other environmental contexts equally, without limitation.

### SUMMARY

The present disclosure provides several alternative FSL system solutions. As the refrigerant system is reduced in complexity and size, the coolant based part of the thermal management system needs to increase in complexity. The FSL system solutions of the present disclosure do that, with maintained functionality on a complete thermal management system level, but with reduced or similar cost.

In some embodiments, the present disclosure provides a thermal management system for a vehicle, the thermal management system including: a refrigerant loop including a liquid cooled condenser and a coolant chiller; a coolant loop including a hot circuit and a cold circuit; where the liquid cooled condenser and the coolant chiller of the refrigerant loop are coupled between the hot circuit and the cold circuit of the coolant loop; a first multi-way valve assembly coupling a HVAC system including a first heat exchanger/heater and a second heat exchanger/cooler to the hot circuit and the cold circuit of the coolant loop; a second multi-way valve assembly coupling a battery system, an electric drive (ED) system, and an ambient heat exchanger to the hot circuit and the cold circuit of the coolant loop; and a third multi-way valve assembly coupling the battery system, the electric drive system, and the ambient heat exchanger to one another. The thermal management system further includes a controller operable for controlling operation of the first multi-way valve assembly, the second multi-way valve assembly, and the third multi-way valve assembly responsive to a sensed environmental state, a sensed vehicle operational state, and/or a sensed user vehicle setting. In some embodiments, one or more of the first multi-way valve assembly, the second multi-way valve assembly, and the third multi-way valve assembly is a 6-way valve assembly. In some embodiments, the thermal management system further includes an electrical valve disposed between the liquid cooled condenser and the coolant chiller of the refrigerant loop, forming a hot gas bypass line in the refrigerant loop making the base thermal management system a refrigerant lossy thermal management system capable of operating in the same and additional modes. Here, the electrical valve is positioned to enable compressor hot gas to bypass the liquid cooled condenser and flow directly to a low pressure side of the refrigerant loop, with the electrical valve then being capable of use to generate excessive heat from the compressor. In some embodiments, the thermal management system further includes a high voltage coolant heater (HVCH) installed in one or more of the hot circuit of the coolant loop, the cold circuit of the coolant loop, the battery system, and the ED system. In some embodiments, the thermal management system further includes a coolant thermal bypass between the liquid cooled condenser in a high pressure side of the refrigerant loop and the chiller in a low pressure side of the refrigerant loop in a coolant lossy configuration.

In some embodiments, the thermal management system further includes a fourth multi-way valve assembly supporting a rear HVAC system. In some embodiments, the fourth multi-way valve assembly supporting the rear HVAC system enables coolant lossy functionality on a coolant side of the coolant loop using a compressor or the ED system. In some embodiments, the fourth multi-way valve assembly supporting the rear HVAC system supplies heating to a vehicle cabin via both the HVAC system and the rear HVAC system.

In some embodiments, the thermal management system is operated in one of a plurality of modes in one or more of a base configuration, with a hot gas bypass line in the refrigerant loop, in a refrigerant lossy configuration, in a coolant lossy configuration, and a fourth multi-way valve assembly supporting a rear HVAC system.

In a first illustrative mode, the thermal management system is operated under high ambient temperature conditions with vehicle cabin cool down and passive cooling of the battery system and the electric drive system, where the first multi-way valve assembly is actuated to couple the second heat exchanger/cooler of the HVAC system to the cold circuit of the coolant loop and to decouple the first heat exchanger/heater of the HVAC system from the hot circuit of the coolant loop, where the second multi-way valve assembly is actuated to decouple both the battery system and the ED system from the coolant loop while the ambient heat exchanger is coupled to the hot circuit of the coolant loop, and where the third multi-way valve assembly is actuated to couple both the battery system and the ED system to the ambient heat exchanger for passive cooling.

In a second illustrative mode, the thermal management system is operated under high ambient temperature conditions with vehicle cabin cool down, active cooling of the battery system, and passive cooling of the ED system, where the first multi-way valve assembly is actuated to couple the second heat exchanger/cooler of the HVAC system to the cold circuit of the coolant loop and to decouple the first heat exchanger/heater of the HVAC system from the hot circuit of the coolant loop, where the second multi-way valve assembly is actuated to couple both the battery system to the cold circuit, and where the third multi-way valve assembly is actuated to decouple the battery system and the ED system while coupling the ED system to the ambient heat exchanger.

In a third illustrative mode, the thermal management system is operated under high ambient temperature conditions with high performance vehicle cabin cool down using both the first heat exchanger/heater and the second heat exchanger/cooler of the HVAC system and passive cooling of the battery system and the ED system, where the first multi-way valve assembly is actuated to couple both the first heat exchanger/heater and the second heat exchanger/cooler of the HVAC system to the cold circuit of the coolant loop and to decouple both the first heat exchanger/heater and the second heat exchanger/cooler of the HVAC system from the hot circuit of the coolant loop, where the second multi-way valve assembly is actuated to decouple both the battery system and the ED system from the coolant loop while the ambient heat exchanger is coupled to the hot circuit of the coolant loop, and where the third multi-way valve assembly is actuated to couple both the battery system and the ED system to the ambient heat exchanger for passive cooling.

In a fourth illustrative mode, the thermal management system is operated under moderate ambient temperature conditions with vehicle cabin dehumidification, balancing of a temperature of the battery, and passive cooling of the ED system, where the first multi-way valve assembly is actuated to couple the second heat exchanger/cooler of the HVAC system to the cold circuit of the coolant loop and to couple the first heat exchanger/heater of the HVAC system to the hot circuit of the coolant loop to perform dehumidification, where the second multi-way valve assembly is actuated to decouple the battery system, the ED system, and the ambient heat exchanger from the coolant loop, and where the third multi-way valve assembly is actuated to isolate the battery system for balancing a temperature of the battery system and to couple the ED system to the ambient heat exchanger for passive cooling.

In a fifth illustrative mode, the thermal management system is operated under low ambient temperature conditions with vehicle cabin heat up using a hot gas bypass line (refrigerant lossy), where the first multi-way valve assembly is actuated to decouple the second heat exchanger/cooler of the HVAC system from the cold circuit of the coolant loop and to couple the first heat exchanger/heater of the HVAC system to the hot circuit of the coolant loop, and where the second multi-way valve assembly is actuated to decouple the battery system, the ED system, and the ambient heat exchanger from the coolant loop.

In a sixth illustrative mode, the thermal management system is operated under low ambient temperature conditions with vehicle cabin heat up using heat pumping from ambient and heating of the battery system using waste heat from the ED system, where the first multi-way valve assembly is actuated to decouple the second heat exchanger/cooler of the HVAC system from the cold circuit of the coolant loop and to couple the first heat exchanger/heater of the HVAC system to the hot circuit of the coolant loop, where the second multi-way valve assembly is actuated to decouple both the battery system and the ED system from the coolant loop while the ambient heat exchanger is coupled to the cold circuit of the coolant loop, and where the third multi-way valve assembly is actuated to couple the battery system to the ED system in isolation such that heating of the battery system using waste heat from the ED system is enabled.

In a seventh illustrative mode, the thermal management system is operated under low ambient temperature conditions with vehicle cabin heat up and heating of the battery system using heat pumping from ambient, where the first multi-way valve assembly is actuated to decouple the second heat exchanger/cooler of the HVAC system from the cold circuit of the coolant loop and to couple the first heat exchanger/heater of the HVAC system to the hot circuit of the coolant loop, where the second multi-way valve assembly is actuated to couple both the battery system and the ED system to the coolant loop while the ambient heat exchanger is coupled to the coolant loop, and where the third multi-way valve assembly is actuated to couple the battery system to the hot circuit of the coolant loop such that heating of the battery system using heat pumping from the ambient heat exchanger is enabled.

In an eighth illustrative mode, the thermal management system is operated under low ambient temperature conditions with high performance vehicle cabin heat up using both the first heat exchanger/heater and the second heat exchanger/cooler of the HVAC system and heat pumping from ambient and waste heat recovery from the battery system, where the first multi-way valve assembly is actuated to couple both the second heat exchanger/cooler of the HVAC system and the first heat exchanger/heater of the HVAC system to the hot circuit of the coolant loop for high performance vehicle cabin heat up, where the second multi-way valve assembly is actuated to couple both the battery system and the ED system to the cold circuit of the coolant loop while the ambient heat exchanger is coupled to the coolant loop, and where the third multi-way valve assembly is actuated to couple the battery system to the cold circuit of the coolant loop such that waste heat may be recovered from the battery system.

In a ninth illustrative mode, the thermal management system is operated under low ambient temperature conditions with vehicle cabin heat up using waste heat recovery from the battery system and the ED system, where the first multi-way valve assembly is actuated to decouple the second heat exchanger/cooler of the HVAC system from the cold circuit of the coolant loop and couple the first heat exchanger/heater of the HVAC system to the hot circuit of the coolant loop, where the second multi-way valve assembly is actuated to couple both the battery system and the ED system to the cold circuit of the coolant loop while the ambient heat exchanger is decoupled from the coolant loop, and where the third multi-way valve assembly is actuated to couple the battery system and the ED system to the cold circuit of the coolant loop such that waste heat may be recovered from the battery system and the ED system to a vehicle cabin.

In some embodiments, the present disclosure provides a method of providing a thermal management system for a vehicle, the method including: providing a refrigerant loop including a liquid cooled condenser and a coolant chiller; providing a coolant loop including a hot circuit and a cold circuit; where the liquid cooled condenser and the coolant chiller of the refrigerant loop are coupled between the hot circuit and the cold circuit of the coolant loop; providing a first multi-way valve assembly coupling a HVAC system including a first heat exchanger/heater and a second heat exchanger/cooler to the hot circuit and the cold circuit of the coolant loop; providing a second multi-way valve assembly coupling a battery system, an ED system, and an ambient heat exchanger to the hot circuit and the cold circuit of the coolant loop; and providing a third multi-way valve assembly coupling the battery system, the electric drive system, and the ambient heat exchanger to one another. In some embodiments, the method further includes providing an electrical valve disposed between the liquid cooled condenser and the coolant chiller of the refrigerant loop, forming a hot gas bypass line in the refrigerant loop making the base thermal management system a refrigerant lossy thermal management system capable of operating in the same and additional modes. Here, the electrical valve is positioned to enable compressor hot gas to bypass the liquid cooled condenser and flow directly to a low pressure side of the refrigerant loop, with the electrical valve then being capable of use to generate excessive heat from the compressor. In some embodiments, the method further includes a HVCH installed in one or more of the hot circuit of the coolant loop, the cold circuit of the coolant loop, the battery system, and the ED system. In some embodiments, the method further includes providing a coolant thermal bypass between the liquid cooled condenser in a high pressure side of the refrigerant loop and the chiller in a low pressure side of the refrigerant loop in a coolant lossy configuration.

In some embodiments, the method includes providing a fourth multi-way valve assembly supporting a rear HVAC system. In some embodimemts, the fourth multi-way valve assembly supporting the rear HVAC system enables coolant lossy functionality on a coolant side of the coolant loop using a compressor or the ED system. In some embodiments, the fourth multi-way valve assembly supporting the rear HVAC system supplies heating to a vehicle cabin via both the HVAC system and the rear HVAC system.

In some embodiments, the thermal management system is operated in one of a plurality of modes in one or more of a base configuration, with a hot gas bypass line in the refrigerant loop, in a refrigerant lossy configuration, in a coolant lossy configuration, and a fourth multi-way valve assembly supporting a rear HVAC system.

In a first mode, the method further includes operating the thermal management system under high ambient temperature conditions with vehicle cabin cool down and passive cooling of the battery system and the electric drive system, where the first multi-way valve assembly is actuated to couple the second heat exchanger/cooler of the HVAC system to the cold circuit of the coolant loop and to decouple the first heat exchanger/heater of the HVAC system from the hot circuit of the coolant loop, where the second multi-way valve assembly is actuated to decouple both the battery system and the ED system from the coolant loop while the ambient heat exchanger is coupled to the hot circuit of the coolant loop, and where the third multi-way valve assembly is actuated to couple both the battery system and the ED system to the ambient heat exchanger for passive cooling.

In a second mode, the method further includes operating the thermal management system under high ambient temperature conditions with vehicle cabin cool down, active cooling of the battery system, and passive cooling of the ED system, where the first multi-way valve assembly is actuated to couple the second heat exchanger/cooler of the HVAC system to the cold circuit of the coolant loop and to decouple the first heat exchanger/heater of the HVAC system from the hot circuit of the coolant loop, where the second multi-way valve assembly is actuated to couple both the battery system and the ED system to the coolant loop while the ambient heat exchanger is coupled to the coolant loop, and where the third multi-way valve assembly is actuated to couple the battery system to the cold circuit of the coolant loop for active cooling while the ED system is decoupled from the cold circuit of the coolant loop and coupled to the ambient heat exchanger for passive cooling.

In a third mode, the method further includes operating the thermal management system under high ambient temperature conditions with high performance vehicle cabin cool down using both the first heat exchanger/heater and the second heat exchanger/cooler of the HVAC system and passive cooling of the battery system and the ED system, where the first multi-way valve assembly is actuated to couple both the first heat exchanger/heater and the second heat exchanger/cooler of the HVAC system to the cold circuit of the coolant loop and to decouple both the first heat exchanger/heater and the second heat exchanger/cooler of the HVAC system from the hot circuit of the coolant loop, where the second multi-way valve assembly is actuated to decouple both the battery system and the ED system from the coolant loop while the ambient heat exchanger is coupled to the hot circuit of the coolant loop, and where the third multi-way valve assembly is actuated to couple both the battery system and the ED system to the ambient heat exchanger for passive cooling.

In a fourth mode, the method further includes operating the thermal management system under moderate ambient temperature conditions with vehicle cabin dehumidification, balancing of a temperature of the battery, and passive cooling of the ED system, where the first multi-way valve assembly is actuated to couple the second heat exchanger/cooler of the HVAC system to the cold circuit of the coolant loop and to couple the first heat exchanger/heater of the HVAC system to the hot circuit of the coolant loop to perform dehumidification, where the second multi-way valve assembly is actuated to decouple the battery system, the ED system, and the ambient heat exchanger from the coolant loop, and where the third multi-way valve assembly is actuated to isolate the battery system for balancing a temperature of the battery system and to couple the ED system to the ambient heat exchanger for passive cooling.

In a fifth mode, the method further includes operating the thermal management system under low ambient temperature conditions with vehicle cabin heat up using a hot gas bypass line (refrigerant lossy), where the first multi-way valve assembly is actuated to decouple the second heat exchanger/cooler of the HVAC system from the cold circuit of the coolant loop and to couple the first heat exchanger/heater of the HVAC system to the hot circuit of the coolant loop, and where the second multi-way valve assembly is actuated to decouple the battery system, the ED system, and the ambient heat exchanger from the coolant loop.

In a sixth mode, the method further includes operating the thermal management system under low ambient temperature conditions with vehicle cabin heat up using heat pumping from ambient and heating of the battery system using waste heat from the ED system, where the first multi-way valve assembly is actuated to decouple the second heat exchanger/cooler of the HVAC system from the cold circuit of the coolant loop and to couple the first heat exchanger/heater of the HVAC system to the hot circuit of the coolant loop, where the second multi-way valve assembly is actuated to decouple both the battery system and the ED system from the coolant loop while the ambient heat exchanger is coupled to the cold circuit of the coolant loop, and where the third multi-way valve assembly is actuated to couple the battery system to the ED system in isolation such that heating of the battery system using waste heat from the ED system is enabled.

In a seventh mode, the method further includes operating the thermal management system under low ambient temperature conditions with vehicle cabin heat up and heating of the battery system using heat pumping from ambient, where the first multi-way valve assembly is actuated to decouple the second heat exchanger/cooler of the HVAC system from the cold circuit of the coolant loop and to couple the first heat exchanger/heater of the HVAC system to the hot circuit of the coolant loop, where the second multi-way valve assembly is actuated to couple both the battery system and the ED system to the coolant loop while the ambient heat exchanger is coupled to the coolant loop, and where the third multi-way valve assembly is actuated to couple the battery system to the hot circuit of the coolant loop such that heating of the battery system using heat pumping from the ambient heat exchanger is enabled.

In an eighth mode, the method further includes operating the thermal management system under low ambient temperature conditions with high performance vehicle cabin heat up using both the first heat exchanger/heater and the second heat exchanger/cooler of the HVAC system and heat pumping from ambient and waste heat recovery from the battery system, where the first multi-way valve assembly is actuated to couple both the second heat exchanger/cooler of the HVAC system and the first heat exchanger/heater of the HVAC system to the hot circuit of the coolant loop for high performance vehicle cabin heat up, where the second multi-way valve assembly is actuated to couple both the battery system and the ED system to the cold circuit of the coolant loop while the ambient heat exchanger is coupled to the coolant loop, and where the third multi-way valve assembly is actuated to couple the battery system to the cold circuit of the coolant loop such that waste heat may be recovered from the battery system.

In a ninth mode, the method further includes operating the thermal management system under low ambient temperature conditions with vehicle cabin heat up using waste heat recovery from the battery system and the ED system, where the first multi-way valve assembly is actuated to decouple the second heat exchanger/cooler of the HVAC system from the cold circuit of the coolant loop and couple the first heat exchanger/heater of the HVAC system to the hot circuit of the coolant loop, where the second multi-way valve assembly is actuated to couple both the battery system and the ED system to the cold circuit of the coolant loop while the ambient heat exchanger is decoupled from the coolant loop, and where the third multi-way valve assembly is actuated to couple the battery system and the ED system to the cold circuit of the coolant loop such that waste heat may be recovered from the battery system and the ED system to a vehicle cabin.

It will be readily apparent to those of ordinary skill in the art that aspects and features of the described embodiments may be included, omitted, or combined as desired in a given application, without limitation.

### BRIEF DESCRIPTION OF THE DRAWINGS

The present disclosure is illustrated and described with reference to the various drawings, in which like reference numbers are used to denote like system components/method steps, as appropriate, and in which:
FIG. 1 is a schematic diagram illustrating the general, base thermal management system layout and architecture of the present disclosure;
FIG. 2 is a schematic diagram illustrating one embodiment of a multi-way valve assembly that may be used in the thermal management system of the present disclosure, with inlet and outlet configurations shown;
FIG. 3 is a series of schematic diagrams illustrating a plurality of modes to be handled by the multi-way valve assembly of the present disclosure;
FIG. 4 is a schematic diagram illustrating a first illustrative mode for operating the base thermal management system of the present disclosure, under high ambient temperature conditions with vehicle cabin cool down and passive cooling of the battery and ED;
FIG. 5 is a schematic diagram illustrating a second illustrative mode for operating the base thermal management system of the present disclosure, under high ambient temperature conditions with vehicle cabin cool down, active cooling of the battery, and passive cooling of the ED;
FIG. 6 is a schematic diagram illustrating a third illustrative mode for operating the base thermal management system of the present disclosure, under high ambient temperature conditions with high performance vehicle cabin cool down using both heat exchanger cores in the HVAC system and passive cooling of the battery and ED;
FIGS. 7A-7C are schematic diagrams illustrating a fourth illustrative mode for operating the base thermal management system of the present disclosure, under moderate ambient temperature conditions with vehicle cabin dehumidification, where FIG. 9A illustrates the balancing of the temperature of the battery and passive cooling of the ED, FIG. 9B illustrates a re-heating deficit (with higher heating power needed in the HVAC system) and heat pumping from ambient, and FIG. 9C illustrates a re-heating surplus (with lower heating power needed in the HVAC system) and ED passive cooling;
FIG. 8 is a schematic diagram illustrating a fifth illustrative mode for operating the thermal management system of the present disclosure, under low ambient temperature conditions with vehicle cabin heat up using a hot gas bypass line (refrigerant lossy);
FIG. 9 is a schematic diagram illustrating a sixth illustrative mode for operating the base thermal management system of the present disclosure, under low ambient temperature conditions with vehicle cabin heat up using heat pumping from ambient and heating of the battery using waste heat from the ED;
FIG. 10 is a schematic diagram illustrating a seventh illustrative mode for operating the base thermal management system of the present disclosure, under low ambient temperature conditions with vehicle cabin heat up and heating of the battery using heat pumping from ambient;
FIGS. 11A-11C are schematic diagrams illustrating an eighth illustrative mode for operating the base thermal management system of the present disclosure, under low ambient temperature conditions, where FIG. 13A illustrates high performance vehicle cabin heat up using both heat exchanger cores in the HVAC system and heat pumping from ambient and waste heat recovery from the battery, FIG. 13B illustrates cabin heating using waste heat recovery from the battery, and FIG. 13C illustrates cabin heat up using waste heat recovery from the ED;
FIG. 12 is a schematic diagram illustrating a ninth illustrative mode for operating the thermal management system of the present disclosure, under low ambient temperature conditions with vehicle cabin heat up using waste heat recovery from the battery and ED;
FIG. 13 is a schematic diagram illustrating the thermal management system of the present disclosure utilizing an additional multi-way valve assembly supporting a rear HVAC system to enable hot gas bypass functionality on the coolant side (coolant lossy) of the coolant loop;
FIG. 14 is a schematic diagram illustrating the thermal management system of the present disclosure utilizing the additional multi-way valve assembly supporting the rear HVAC system to supply heating to the vehicle cabin via both the (front) HVAC system and the rear HVAC system;
FIG. 15 is a schematic diagram illustrating the thermal management system of the present disclosure including an HVCH on the hot circuit of the coolant loop to help with extra heat load into the coolant apart from the liquid cooled condenser or completely replacing the liquid cooled condenser;
FIG. 16 is a schematic diagram illustrating cabin and battery system heating using the HVCH;
FIG. 17 is a schematic diagram illustrating the thermal management system of the present disclosure including an HVCH on the cold circuit of the coolant loop to help with extra heat load into the coolant apart from the liquid cooled condenser or completely replacing the liquid cooled condenser;
FIG. 18 is a schematic diagram illustrating cabin and battery system heating using the HVCH as a heat source for a heat pump;
FIG. 19 is a schematic diagram illustrating the thermal management system of the present disclosure including the HVCH in the battery coolant circuit to provide heat directly to the battery system or to act as a heat source for a heat pump, enabling it to supply heat to the cabin;
FIG. 20 is a schematic diagram illustrating battery heating using the HVCH;
FIG. 21 is a schematic diagram illustrating cabin heating using heat pumping from the HVCH;
FIG. 22 is a schematic diagram illustrating the thermal management system of the present disclosure including a coolant thermal bypass in a "coolant lossy" configuration;
FIG. 23 is a schematic diagram illustrating cabin heat up using the coolant thermal bypass (coolant lossy);
FIG. 24 is a schematic diagram illustrating the thermal management system utilizing an additional multi-way valve (V4) allowing the thermal management system to support the rear HVAC system;
FIG. 25 illustrates a cabin cool down mode;
FIG. 26 illustrates a cabin heat up mode with heat pumping from ambient;
FIG. 27 illustrates a refrigerant lossy configuration with the rear HVAC system;
FIG. 28 illustrates a coolant lossy configuration with the rear HVAC system; and
FIG. 29 illustrates the use of the HVCH with the rear HVAC system.

It will be readily apparent to those of ordinary skill in the art that aspects and features of the illustrated embodiments may be included, omitted, or combined as desired in a given application, without limitation.

### DETAILED DESCRIPTION

The present disclosure provides multiple thermal management system solutions, with variants being due to the heating solutions of battery and cabin of the EV. This can be solved in a few different ways, namely:
- utilizing a high voltage air heater (HVAH),
- utilizing a high voltage coolant heater HVCH,
- utilizing extra ED heat, or another kind of running power electronics in an inefficient way,
- utilizing a coolant lossy mode, and/or
- utilizing a refrigerant lossy mode.

This thermal management system of the present disclose is a comprehensive solution based on a full secondary loop, equipped with a valve set up which can provide a scalable approach for distributing the hot and cold coolant to various consumers and thermal management interfaces, including the cabin climatization system (the HVAC system), the battery and the electric driveline. This proposed thermal management system utilizes a single external air heat exchanger in the front end cooling module and features a unique integration that enables waste heat recovery from all sources.

The general thermal management system layout and architecture is similar for all base variants, with two heat distribution circuits that can be directed to the different heat sources and/or sinks. The two different heat distribution circuits may have different temperature levels to handle cooling/heating of the different interfaces according to the vehicle needs. Some valve variations and resulting functionality deltas for the variants may however be present, and components can be incorporated in other extended variants.

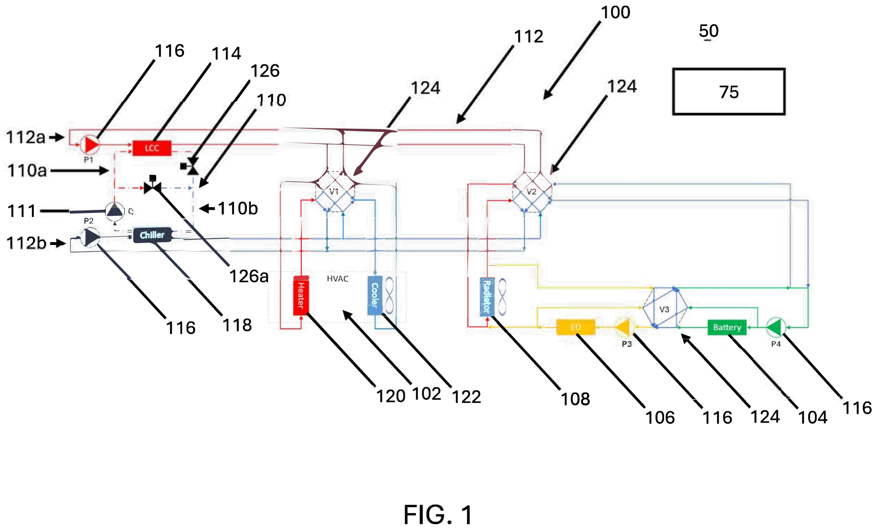

Referring to FIG. 1, the base thermal management system 100 of the present disclosure provides a comprehensive solution based on a FSL, equipped with a valve set up that can provide a scalable approach for distributing the hot and cold coolant to various consumers and thermal management interfaces, including the cabin climatization system (i.e., the HVAC system 102), the battery system 104, and the ED system 106. This thermal management system 100 utilizes a single external air heat exchanger (i.e., radiator 108) and features a unique integration that enables waste heat recovery from all sources. Both a refrigerant loop 110 including a liquid cooled condenser (LCC) 110a/114 and a chiller 110b/118 and a coolant loop 112 having a hot circuit 112a and a cold circuit 112b are provided. The refrigerant loop 110 is disposed between the hot circuit 112a of the coolant loop 112 and the cold circuit 112b of the coolant loop 112. The refrigerant loop 110 includes a compressor (C) 111. The hot circuit 112a of the coolant loop 112 includes the LCC 114 and a pump (P1) 116. The cold circuit 112b of the coolant loop 112 includes the chiller 118 and a pump (P2) 116. The HVAC system 102 includes a heater 120 and a cooler 122 that are coupled to the hot circuit 112a and the cold circuit 112b of the coolant loop 112 via a multi-way valve assembly (V1) 124. The battery system 104 includes the battery 104 and a pump (P4) 116. The ED system 106 includes the ED 106 and a pump (P3) 116. Both the battery system 104 and the ED system 106 are coupled to the hot circuit 112a and the cold circuit 112b of the coolant loop 112 and the radiator 108 by a multi-way valve assembly (V2) 124, and are coupled to one another by a multi-way valve assembly (V3) 124. Other valve assemblies and the like may also be included as desired, and this list of components is not exclusive of other components well known to those of ordinary skill in the art. For example, the refrigerant loop 110 may utilize one or more valves to control the refrigerant flow 126. It should be noted that, as used, "couple" and "decouple" refer to thermal coupling via the direct connection of fluid flows by which heat is subsequently transferred. Of note, the hot gas bypass valve 126a enabling a hot gas bypass line in the refrigerant loop 110 is used in a "refrigerant lossy" variation of the thermal management system 100 as a modification to the base thermal management system 100 that does not utilize such hot gas bypass line and hot gas bypass valve 126a.

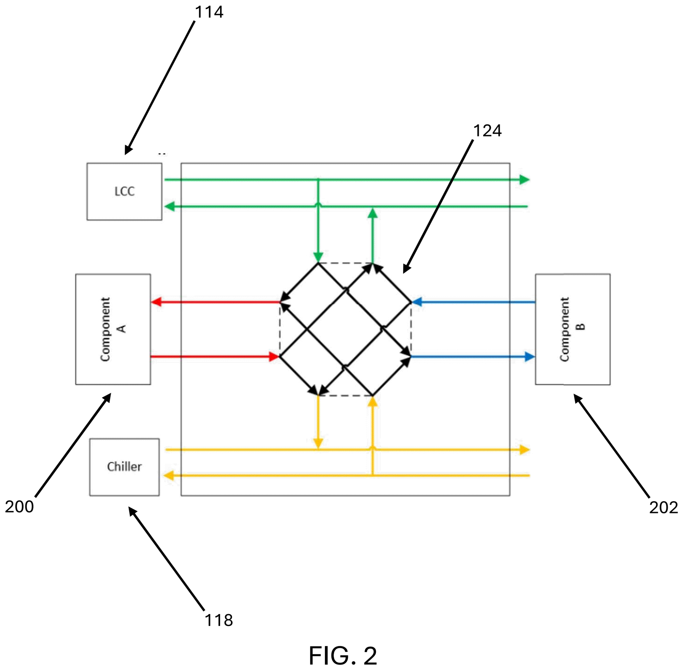

FIG. 2 is a schematic diagram illustrating one embodiment of a multi-way valve assembly 124, such as a 6-way valve assembly, that may be used in the thermal management system 100 of the present disclosure, with inlet and outlet configurations shown. In general, the multi-way valve assembly 124 may be dual layer, with multiple channels on each level - to enable the extensive functionality required with only the single actuator. In this respect, the multi-way valve assembly 124 represents a multi-port valve assembly with multiple selectable inlets and outlets. It will be readily apparent to those of ordinary skill in the art that other types of valve assemblies 124 may be used equally. As is illustrated, the multi-way valve assembly 124 is connected to the hot and cold coolant circuits 112a,112b and multiple illustrative components 200,202 to enable the system 100 to support the various modes.

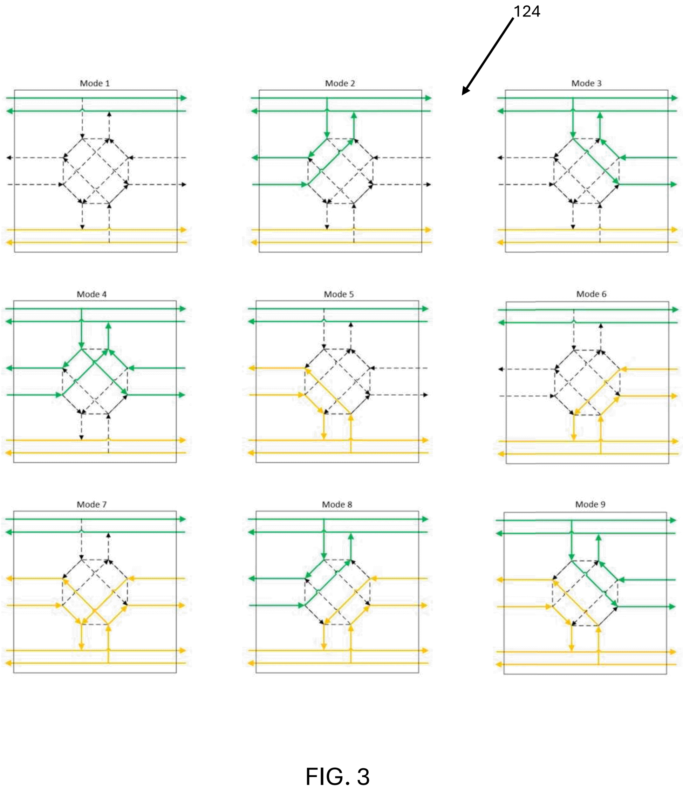

FIG. 3 is a series of schematic diagrams illustrating a plurality of modes to be handled by the multi-way valve assembly 124 of the present disclosure. Apart from these illustrative modes, a proportionality function may be for each, i.e., a variable opening degree and not only a binary opened/closed functionality.

To illustrate the functionality of the valve assemblies 124 and the various modes that the thermal management system 100 can support, the main modes are outlined below.

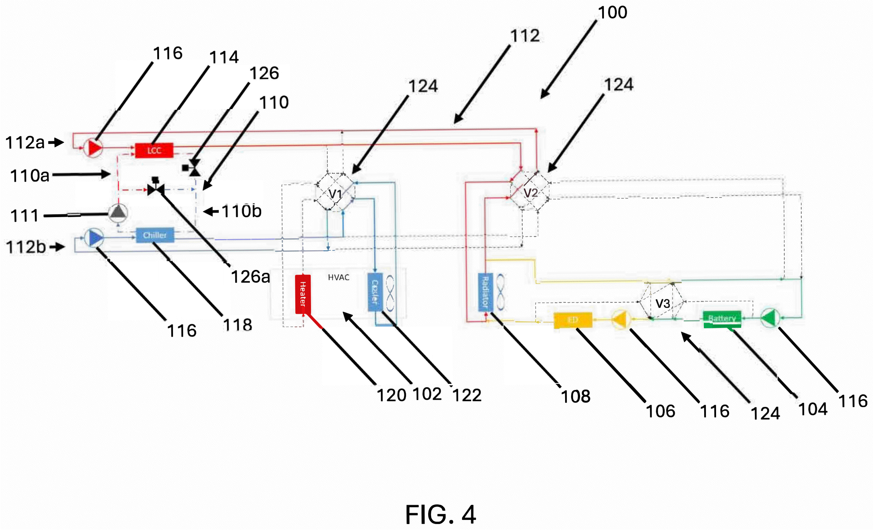

Referring to FIG. 4, in a first illustrative mode, the base thermal management system 100, without the hot gas bypass line in the refrigerant loop 110, is operated under high ambient temperature conditions with vehicle cabin cool down and passive cooling of the battery 104 and ED 106. Here, and in all embodiments, high ambient temperature conditions may refer to those involving ambient temperatures above about 15 degrees C, depending on the sun load. As illustrated, the multi-way valve assembly (V1) 124 is actuated to couple the cooler 122 of the HVAC system 102 to the cold circuit 112b of the coolant loop 112 and to decouple the heater 120 of the HVAC system 102 from the hot circuit 112a of the coolant loop 112. The multi-way valve assembly (V2) 124 is actuated to decouple both the battery system 104 and the ED system 106 from the coolant loop 112, while the radiator 108 remains coupled to the hot circuit 112a of the coolant loop 112. The multi-way valve assembly (V3) 124 is actuated to couple both the battery system 104 and the ED system 106 to the radiator 108 for passive cooling, without the aide of the cold circuit 112b of the coolant loop 112.

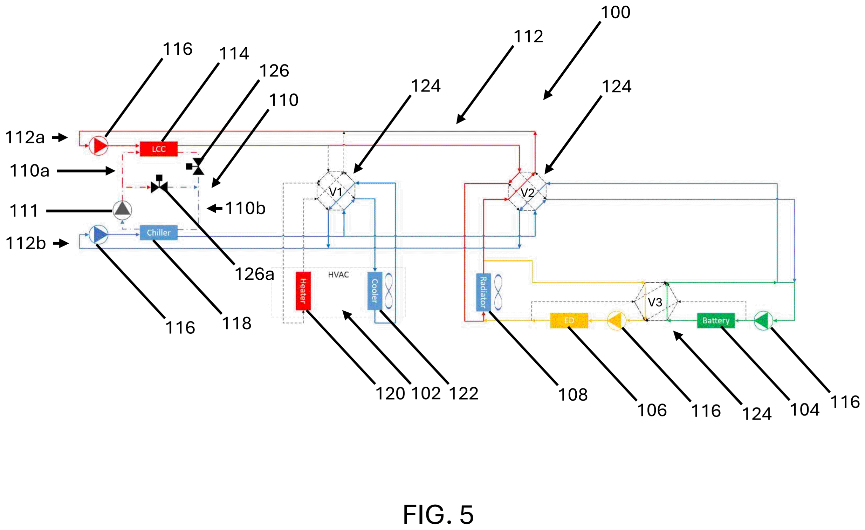

Referring to FIG. 5, in a second illustrative mode, the base thermal management system 100, without the hot gas bypass line in the refrigerant loop 110, is operated under high ambient temperature conditions with vehicle cabin cool down, with active cooling of the battery 104, and passive cooling of the ED 106. As illustrated, the multi-way valve assembly (V1) 124 is actuated to couple the cooler 122 of the HVAC system 102 to the cold circuit 112b of the coolant loop 112 and to decouple the heater 120 of the HVAC system 102 from the hot circuit 112a of the coolant loop 112. The multi-way valve assembly (V2) 124 is actuated to couple both the battery system 104 and the ED system 106 to the coolant loop 112, while the radiator 108 also remains coupled to the coolant loop 112. The multi-way valve assembly (V3) 124 is actuated to couple the battery system 104 to the cold circuit 112b of the coolant loop 112 for active cooling, while the ED system 106 is decoupled from the cold circuit 112b of the coolant loop and coupled to the radiator 108 for passive cooling, without the aide of the cold circuit 112b of the coolant loop 112.

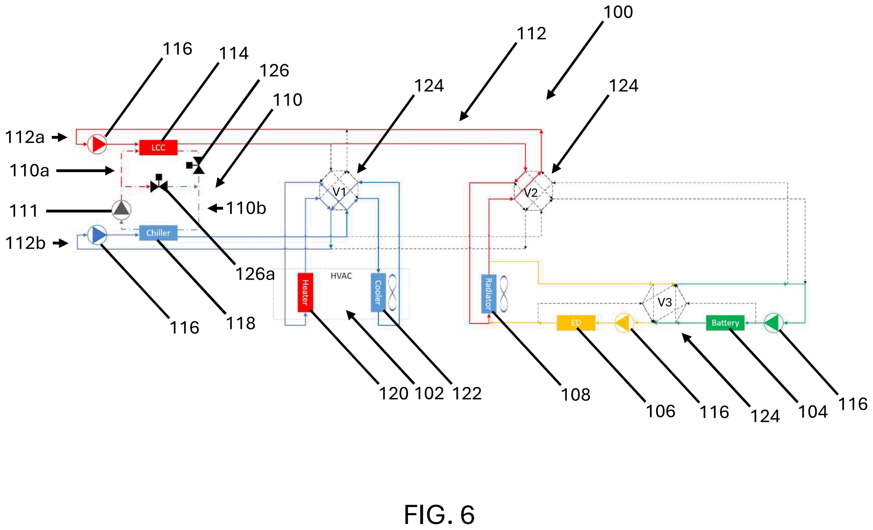

Referring to FIG. 6, in a third illustrative mode, the base thermal management system 100, without the hot gas bypass line in the refrigerant loop 110, is operated under high ambient temperature conditions with high performance vehicle cabin cool down using both heat exchanger cores 120, 122 in the HVAC system 102 and passive cooling of the battery 104 and ED 106. As illustrated, the multi-way valve assembly (V1) 124 is actuated to couple both the heater 120 and the cooler 122 (which are both heat exchanger cores) of the HVAC system 102 to the cold circuit 112b of the coolant loop 112 and to decouple both the heater 120 and the cooler 122 of the HVAC system 102 from the hot circuit 112a of the coolant loop 112. The multi-way valve assembly (V2) 124 is actuated to decouple both the battery system 104 and the ED system 106 from the coolant loop 112, while the radiator 108 remains coupled to the hot circuit 112a of the coolant loop 112. The multi-way valve assembly (V3) 124 is actuated to couple both the battery system 104 and the ED system 106 to the radiator 108 for passive cooling, without the aide of the cold circuit 112b of the coolant loop 112.

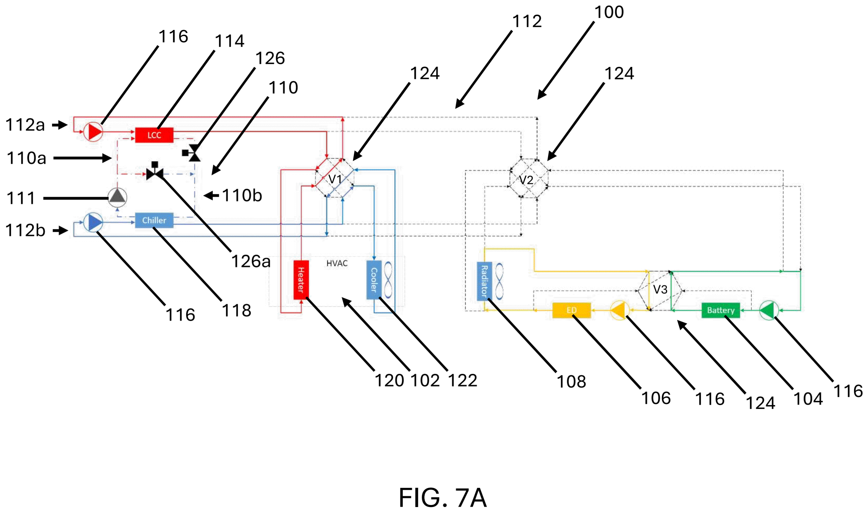

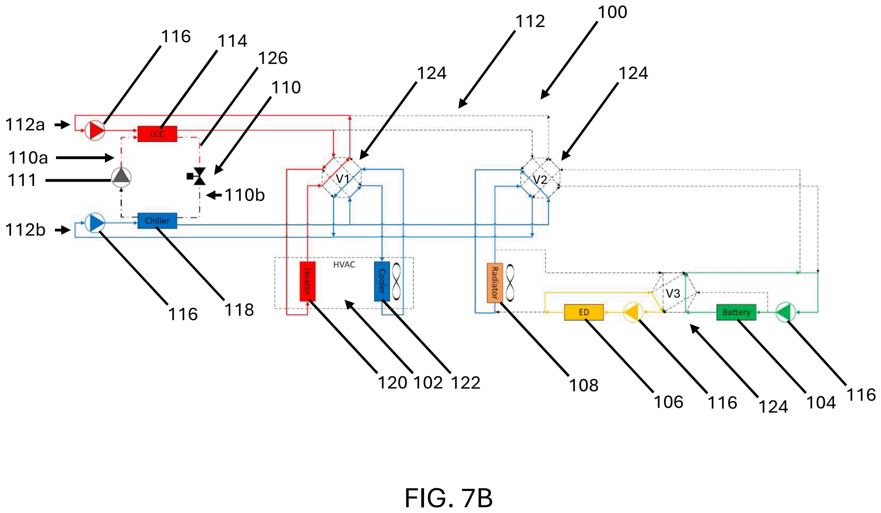

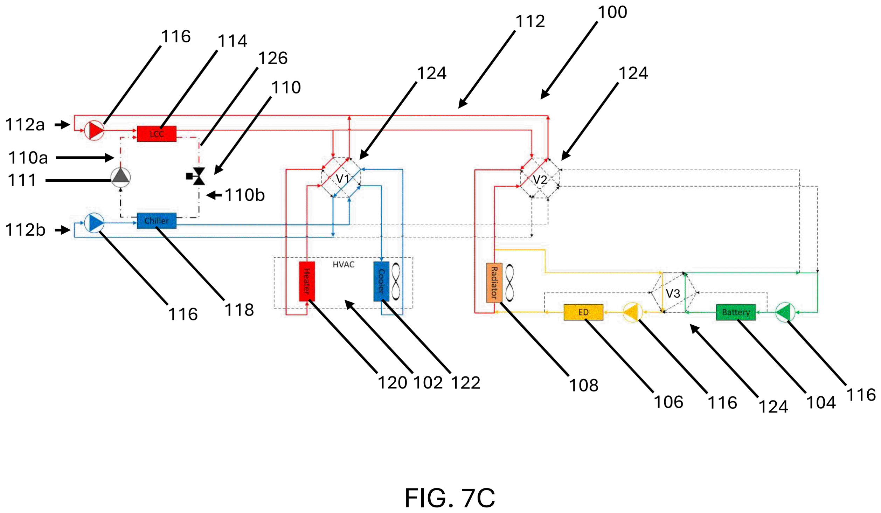

Referring to FIG. 7A, in a fourth illustrative mode, the base thermal management system 100, without the hot gas bypass line in the refrigerant loop 110, is operated under moderate ambient temperature conditions with vehicle cabin dehumidification (re-heating), balancing of the temperature of the battery 104, and passive cooling of the ED 106. Here, and in all embodiments, moderate ambient temperature conditions may refer to those involving ambient temperatures between about 3 degrees C and about 35 degrees C. As illustrated, the multi-way valve assembly (V1) 124 is actuated to couple the cooler 122 of the HVAC system 102 to the cold circuit 112b of the coolant loop 112 and to couple the heater 120 of the HVAC system 102 to the hot circuit 112a of the coolant loop 112 to perform the dehumidification function. The multi-way valve assembly (V2) 124 is actuated to decouple the battery system 104, the ED system 106, and the radiator 108 from the coolant loop 112. The multi-way valve assembly (V3) 124 is actuated to isolate the battery system 104 for the balancing of the temperature of the battery system 104 and to couple the ED system 106 to the radiator 108 for passive cooling, without the aide of the cold circuit 112b of the coolant loop 112. While FIG. 7A illustrates the balancing of the temperature of the battery system 104 and passive cooling of the ED system 106, FIG. 7B illustrates an alternative mode with a re-heating deficit (with higher heating power needed in the HVAC system 102) and heat pumping from ambient, and FIG. 7C illustrates an alternative mode with a re-heating surplus (with lower heating power needed in the HVAC system 102) and passive cooling of the ED system 106.

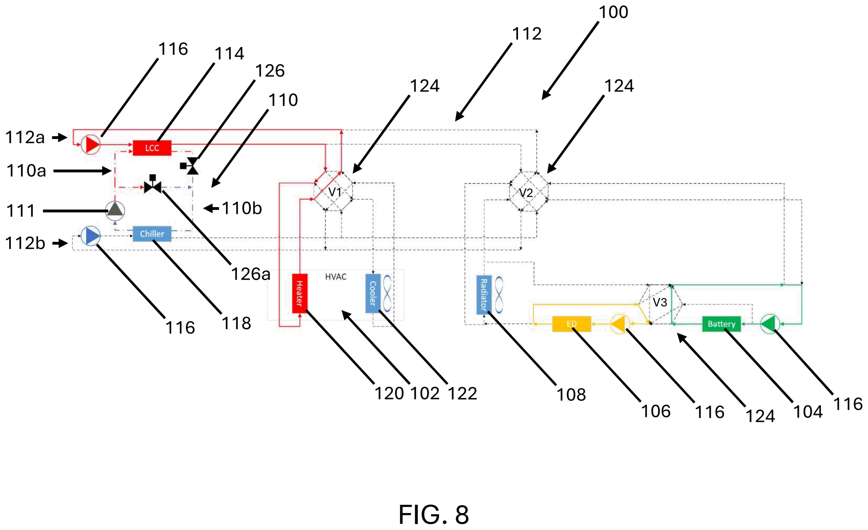

Referring to FIG. 8, in a fifth illustrative mode, the thermal management system 100 is operated under low ambient temperature conditions with vehicle cabin heat up using the hot gas bypass line in the refrigerant loop 110 (refrigerant lossy) enabled by the hot gas bypass valve 126a. Here, and in all embodiments, low ambient temperature conditions may refer to those involving ambient temperatures below about 15 degrees C. As illustrated, the multi-way valve assembly (V1) 124 is actuated to decouple the cooler 122 of the HVAC system 102 from the cold circuit 112b of the coolant loop 112 and to couple the heater 120 of the HVAC system 102 to the hot circuit 112a of the coolant loop 112. The multi-way valve assembly (V2) 124 is actuated to decouple the battery system 104, the ED system 106, and the radiator 108 from the coolant loop 112.

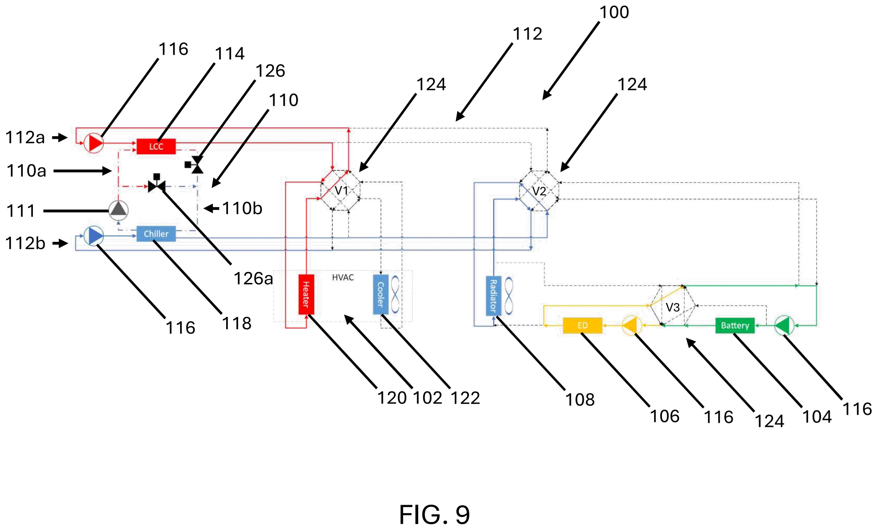

Referring to FIG. 9, in a sixth illustrative mode, the base thermal management system 100, without the hot gas bypass line in the refrigerant loop 110, is operated under low ambient temperature conditions with vehicle cabin heat up using heat pumping from ambient and heating of the battery 104 using waste heat from the ED 106. As illustrated, the multi-way valve assembly (V1) 124 is actuated to decouple the cooler 122 of the HVAC system 102 from the cold circuit 112b of the coolant loop 112 and to couple the heater 120 of the HVAC system 102 to the hot circuit 112a of the coolant loop 112. The multi-way valve assembly (V2) 124 is actuated to decouple both the battery system 104 and the ED system 106 from the coolant loop 112, while the radiator 108 remains coupled to the cold circuit 112b of the coolant loop 112. Thus, vehicle cabin heat up using heat pumping from the radiator 108 is enabled. The multi-way valve assembly (V3) 124 is actuated to couple the battery system 104 to the ED system 106 in isolation such that heating of the battery system 104 using waste heat from the ED system 106 is enabled. Here, cabin heat up is enabled using heat pumping from ambient and battery system heating using ED waste heat in and "ED extra heat" mode involves intentionally operating the ED system 106 and/or high-power electronics inefficiently to generate additional waste heat for heating purposes.

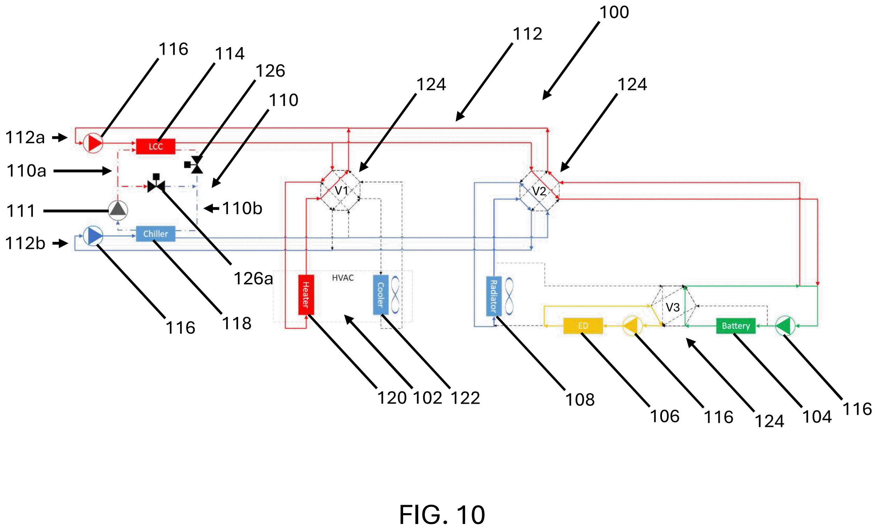

Referring to FIG. 10, in a seventh illustrative mode, the base thermal management system 100, without the hot gas bypass line in the refrigerant loop 110, is operated under low ambient temperature conditions with vehicle cabin heat up and heating of the battery 104 using heat pumping from ambient. As illustrated, the multi-way valve assembly (V1) 124 is actuated to decouple the cooler 122 of the HVAC system 102 from the cold circuit 112b of the coolant loop 112 and to couple the heater 120 of the HVAC system 102 to the hot circuit 112a of the coolant loop 112. The multi-way valve assembly (V2) 124 is actuated to couple both the battery system 104 and the ED system 106 to the coolant loop 112, while the radiator 108 remains coupled to the coolant loop 112. Thus, vehicle cabin heat up using heat pumping from the radiator 108 is enabled. The multi-way valve assembly (V3) 124 is actuated to couple the battery system 104 to the hot circuit 112a of the coolant loop 112, such that heating of the battery system 104 using heat pumping from the radiator 108 is also enabled.

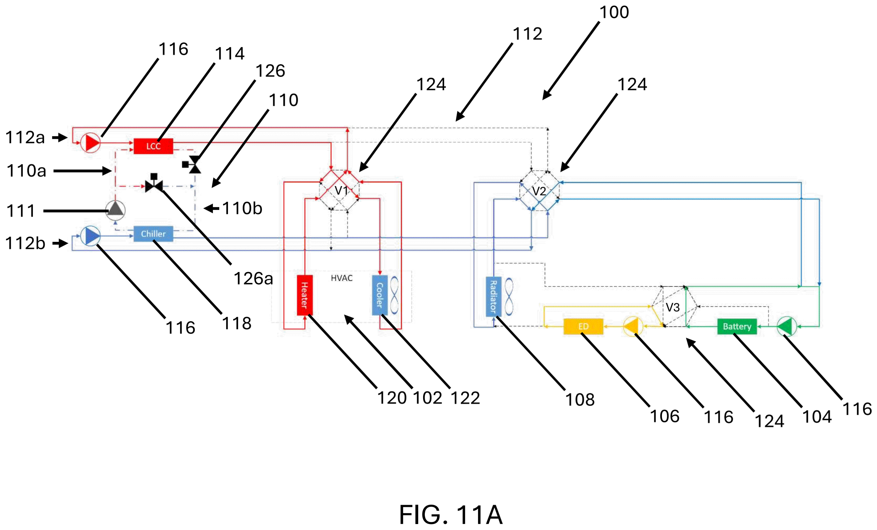

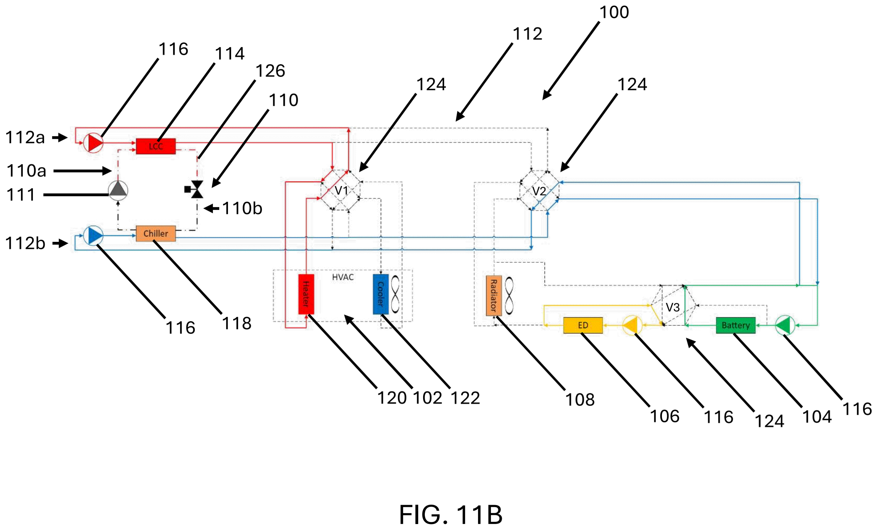

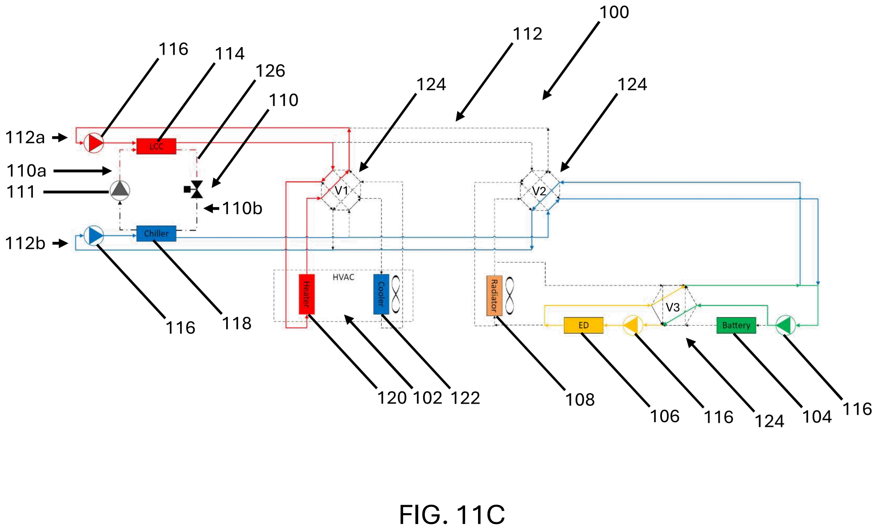

Referring to FIG. 11A, in an eighth illustrative mode, the base thermal management system 100, without the hot gas bypass line in the refrigerant loop 110, is operated under low ambient temperature conditions with high performance vehicle cabin heat up using both heat exchanger cores 120,122 in the HVAC system 102 and heat pumping from ambient and waste heat recovery from the battery 104. As illustrated, the multi-way valve assembly (V1) 124 is actuated to couple both the cooler 122 of the HVAC system and the heater 120 of the HVAC system 102 to the hot circuit 112a of the coolant loop 112 for high performance vehicle cabin up. The multi-way valve assembly (V2) 124 is actuated to couple both the battery system 104 and the ED system 106 to the cold circuit 112b of the coolant loop 112, while the radiator 108 remains coupled to the coolant loop 112. Thus, vehicle cabin heat up using heat pumping from the radiator 108 is also enabled. The multi-way valve assembly (V3) 124 is actuated to couple the battery system 104 to the cold circuit 112b of the coolant loop 112, such that waste heat may be recovered from the battery system 104. FIG. 11B illustrates an alternative mode with cabin heating using waste heat recovery from the battery system 104, and FIG. 11C illustrates and alternative mode with cabin heat up using waste heat recovery from the ED system 106, neither utilizing both heat exchanger cores 120,122 in the HVAC system 102.

As illustrated in some of the above figures, the base thermal management system 100 can be modified by incorporating a the hot gas bypass line into the refrigerant loop 110 via the incorporation and actuation of the associated hot gas bypass valve 126a. This configuration, as alluded to above, is referred to as the "refrigerant lossy" thermal management system 100. The "refrigerant lossy" thermal management system 100 with the hot gas bypass line supports all the previously mentioned modes of the base thermal management system 100, as indicated, and can additionally support the below modes. For example, FIG. 10 illustrated cabin heat up using the hot gas bypass line (refrigerant lossy).

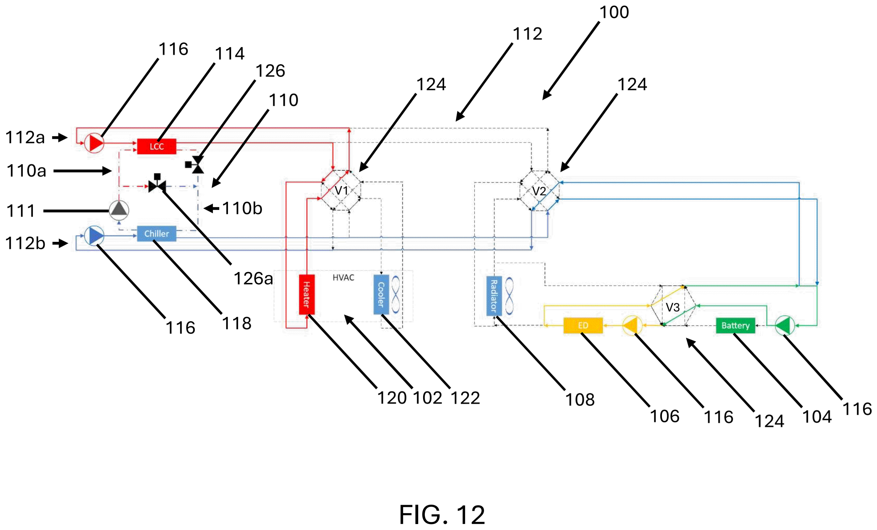

Referring to FIG. 12, in a ninth illustrative mode, the thermal management system 100 is operated under low ambient temperature conditions with vehicle cabin heat up using waste heat recovery from the battery 104 and ED 106. As illustrated, the multi-way valve assembly (V1) 124 is actuated to decouple the cooler 122 of the HVAC system 102 from the cold circuit 112b of the coolant loop 112 and couple the heater 120 of the HVAC system 102 to the hot circuit 112a of the coolant loop 112. The multi-way valve assembly (V2) 124 is actuated to couple both the battery system 104 and the ED system 106 to the cold circuit 112b of the coolant loop 112, while the radiator 108 is decoupled from the coolant loop 112. The multi-way valve assembly (V3) 124 is actuated to couple the battery system 104 and the ED system 106 to the cold circuit 112b of the coolant loop 112, such that waste heat may be recovered from the battery system 104 and the ED system 106 to the vehicle cabin.

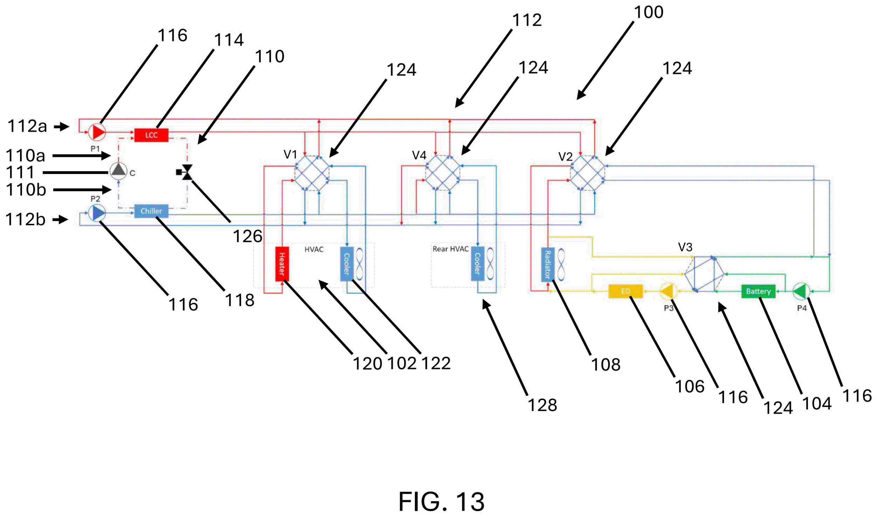

Referring to FIG. 13, the thermal management system 100 is highly flexible and modular. Additional functionality can be incorporated by adding multi-way valve assemblies 124, without significant modifications to the rest of the thermal management system 100. For instance, by installing an additional multi-way valve assembly (V4) 124, the thermal management system 100 can support a rear HVAC system 128 and enable hot gas bypass functionality on the coolant side 112b (coolant lossy).

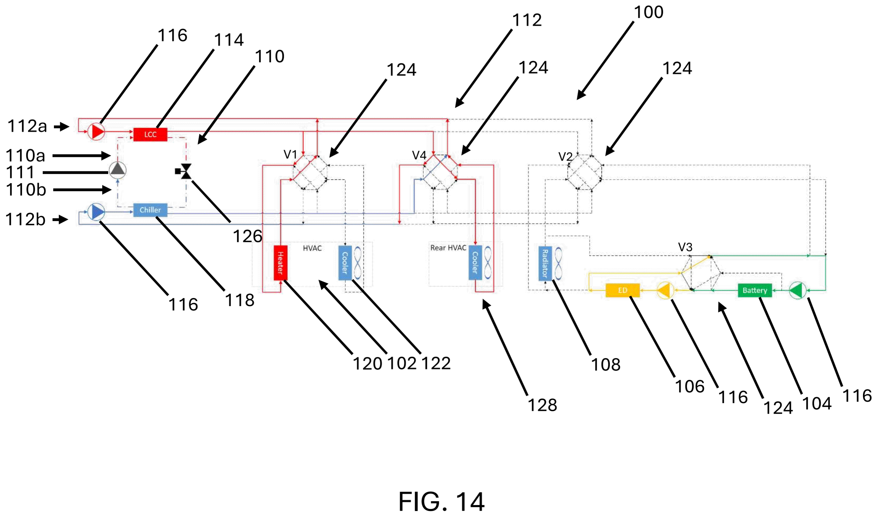

Referring to FIG. 14, for example, in low ambient temperature conditions, the thermal management system 100 can utilize the coolant lossy functionality to supply heating to the vehicle cabin via both the (front) HVAC system 102 and the rear HVAC system 128.

Another approach to improving heating performance is the integration of a HVCH 130. The HVCH 130 can be installed at various points within the thermal management system 100, such as within the hot circuit 112a of the coolant loop 112, the cold circuit 112b of the coolant loop 112, the battery system 104, and/or the ED system 106. Following are layouts illustrating some possible placements. These systems can support all the modes of the base thermal management system 100; however, the specific location of the HVCH 130 may enable additional modes.

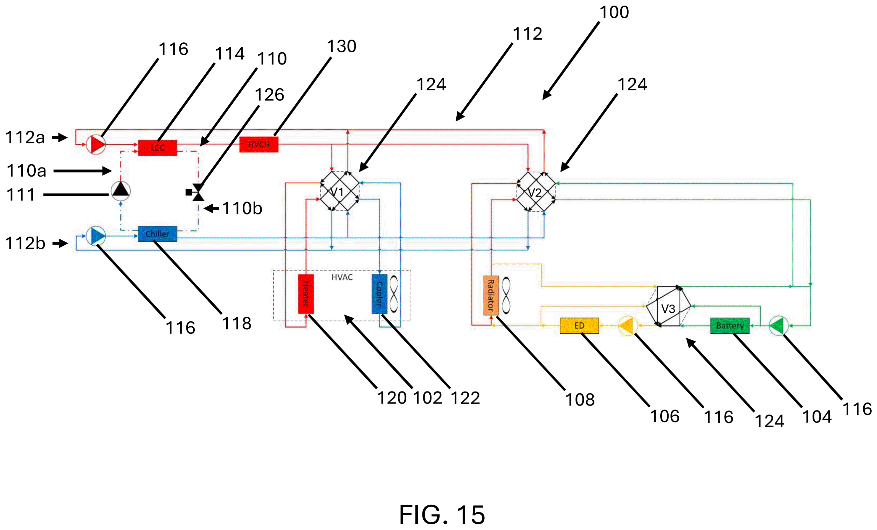

Referring to FIG. 15, the thermal management system 100 includes the HVCH 130 on the hot circuit 112a of the coolant loop 112. In this configuration, the HVCH 130 can help with extra heat load into the coolant apart from the liquid cooled condenser 114 or can completely replace the liquid cooled condenser 114.

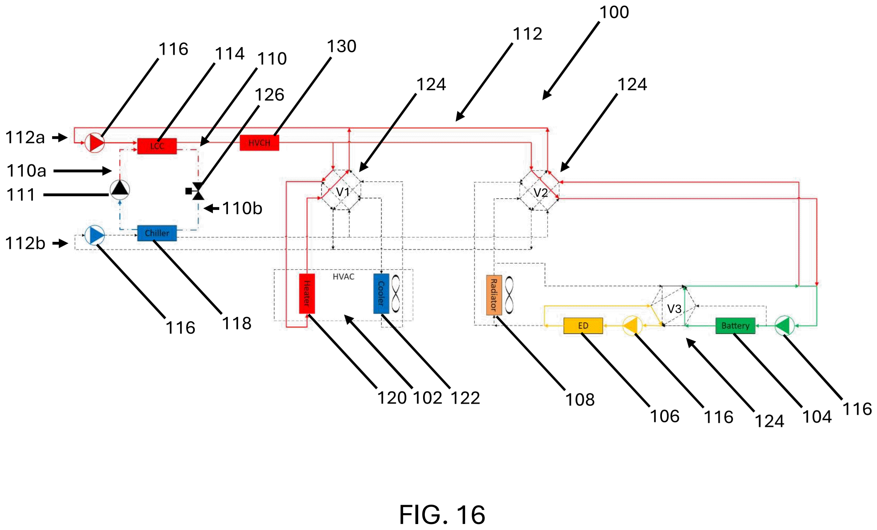

Referring to FIG. 16, cabin and battery system heating is provided using the HVCH 130.

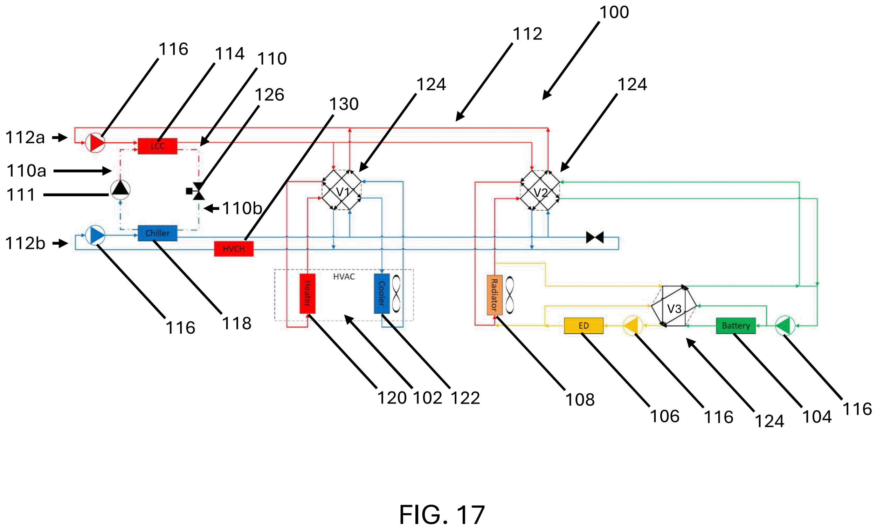

Referring to FIG. 17, the thermal management system 100 includes the HVCH 130 on the cold circuit 112b of the coolant loop 112. In this configuration, the HVCH 130 can also help with extra heat load into the coolant apart from the liquid cooled condenser 114 or can completely replace the liquid cooled condenser 114.

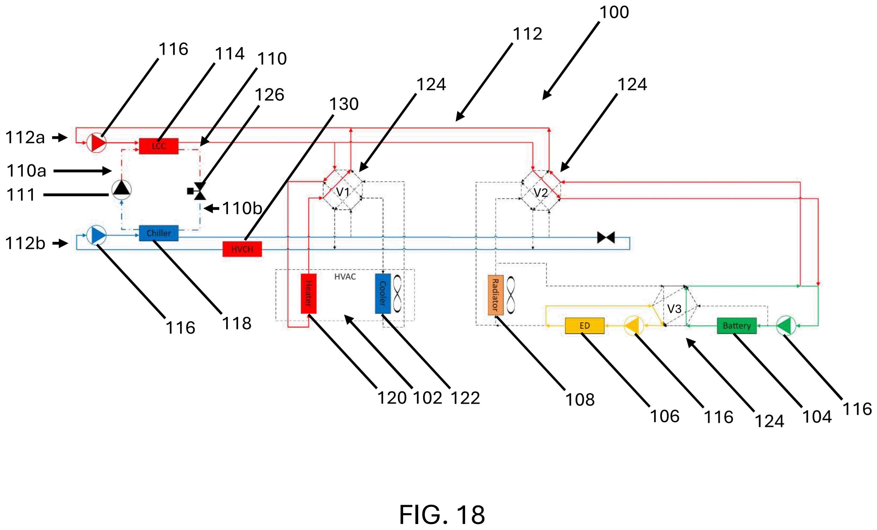

Referring to FIG. 18, cabin and battery system heating is provided using the HVCH 130 used as a heat source for a heat pump.

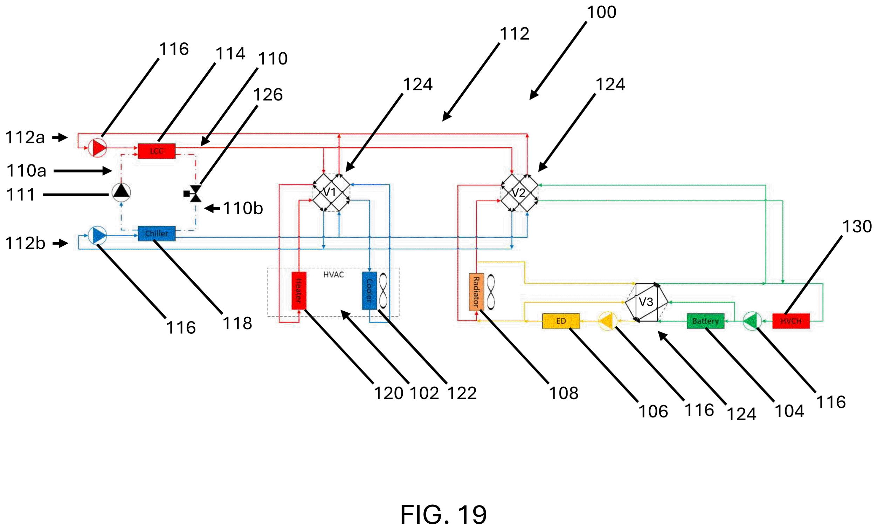

Referring to FIG. 19, the thermal management system 100 includes the HVCH 130 in the battery coolant circuit. In this configuration, the HVCH 130 can provide heat directly to the battery system 104. In some cases, it can also act as a heat source for the heat pump, enabling it to supply heat to the cabin.

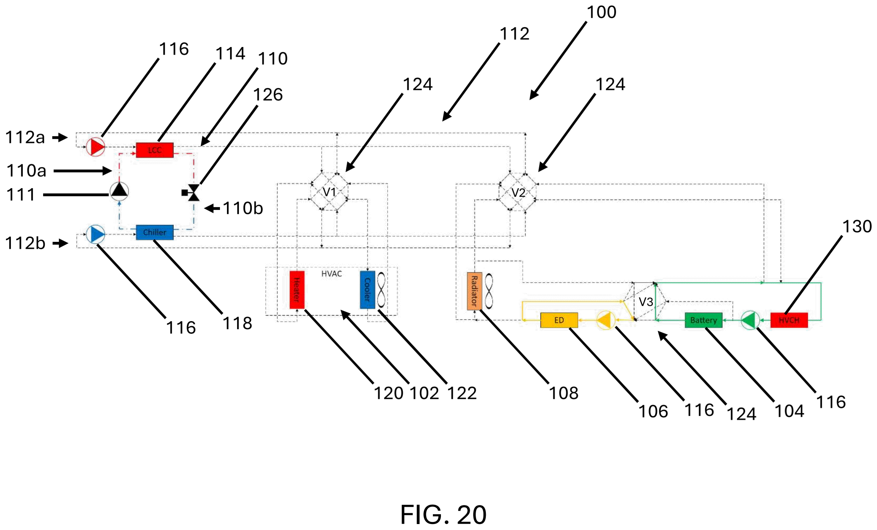

Referring to FIG. 20, battery heating using the HVCH 130 is provided.

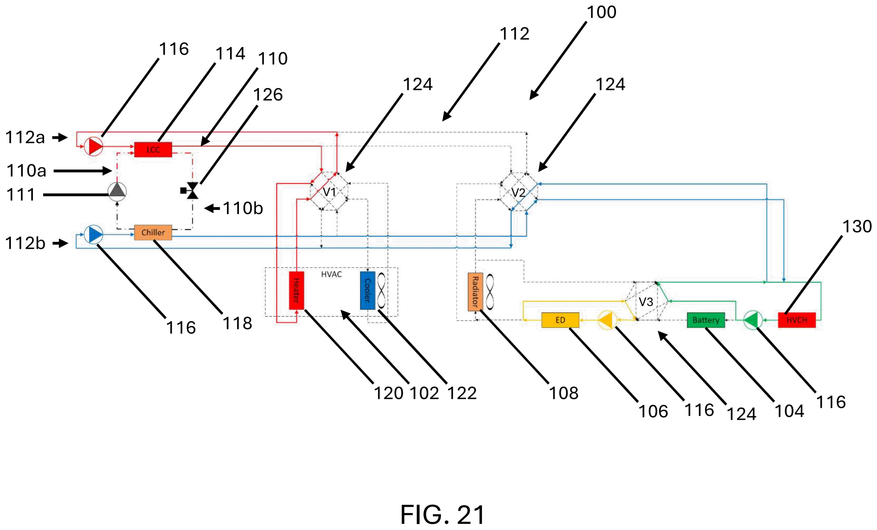

Referring to FIG. 21, cabin heating using heat pumping from the HVCH 130 is provided.

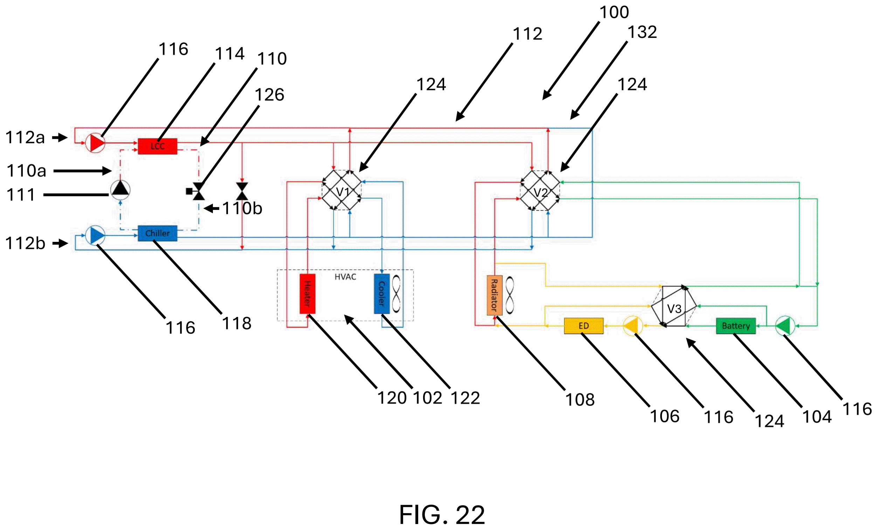

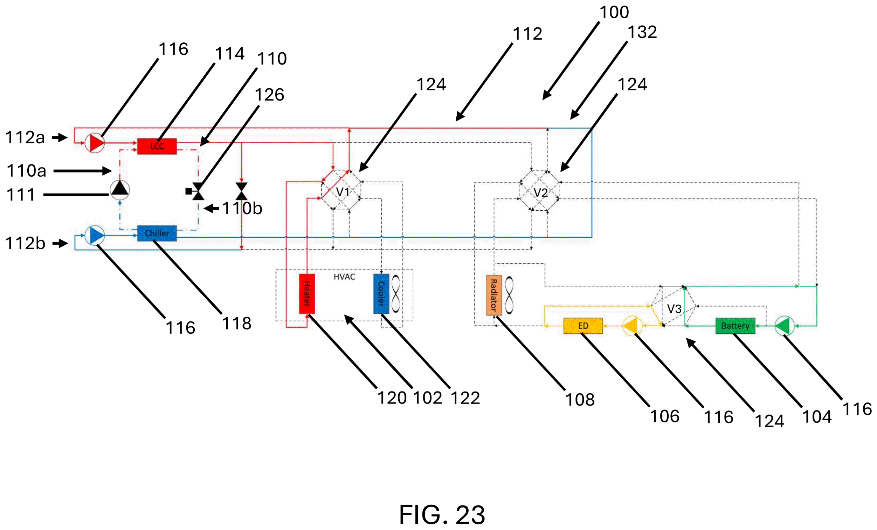

Referring to FIG. 22, the thermal management system 100 includes a coolant thermal bypass 132, also referred to as a "coolant lossy" configuration. In this setup, hot coolant from the liquid cooled condenser 114 is redirected to the chiller 118, activating the compressor 111 to generate additional heat. This heat can then be efficiently distributed to various components, such as the cabin or the battery system 104, depending on the thermal management system requirements. By incorporating this functionality, the thermal management system 100 enhances its ability to manage and deliver heat effectively. This configuration can support all the modes of the "base system" and can also enable the additional mode illustrated in FIG. 23, providing cabin heat up using coolant thermal bypass (coolant lossy).

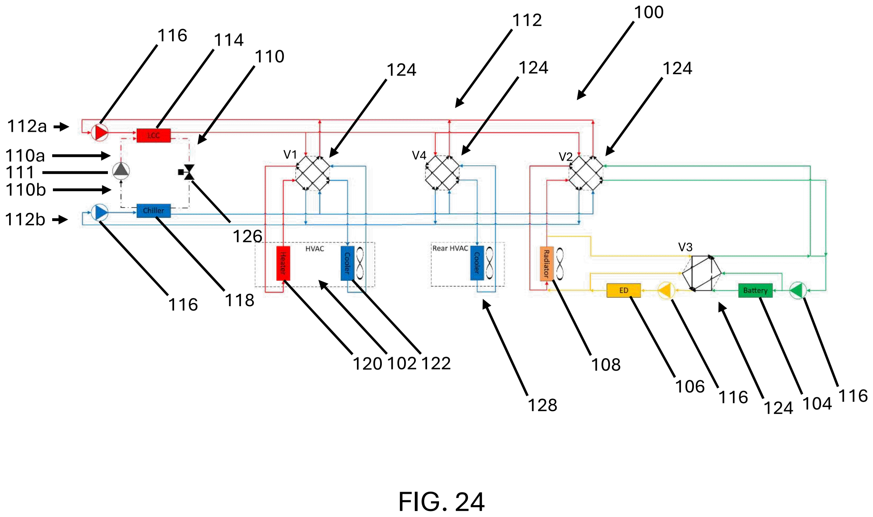

Referring to FIG. 24, the thermal management system 100 is highly flexible and modular, enabling the integration of additional functionality with minimal changes to the existing design. For example, adding a single valve (V4) 124 allows the thermal management system 100 to support the rear HVAC system 128, as provided above. This enhancement can be applied to all the configurations discussed above. This enhancement can also support all the modes mentioned for the "base system" and the following additional modes.

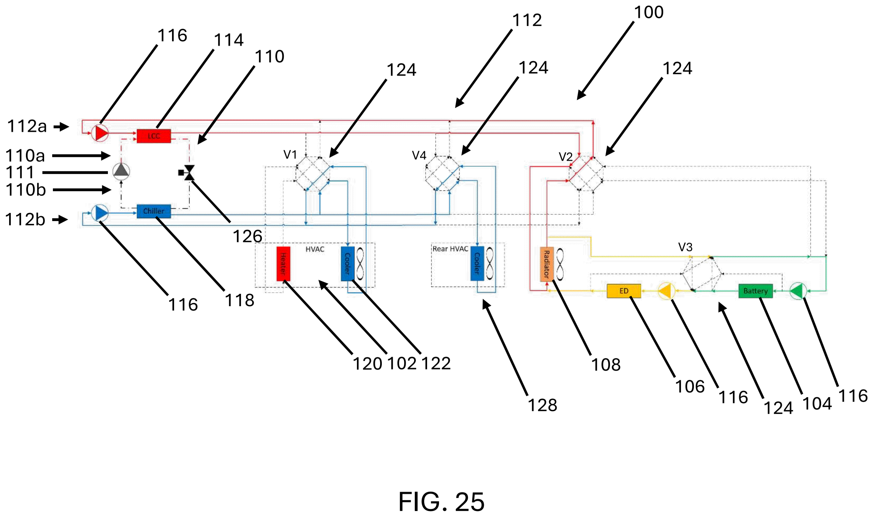

FIG. 25 illustrates a cabin cool down mode.

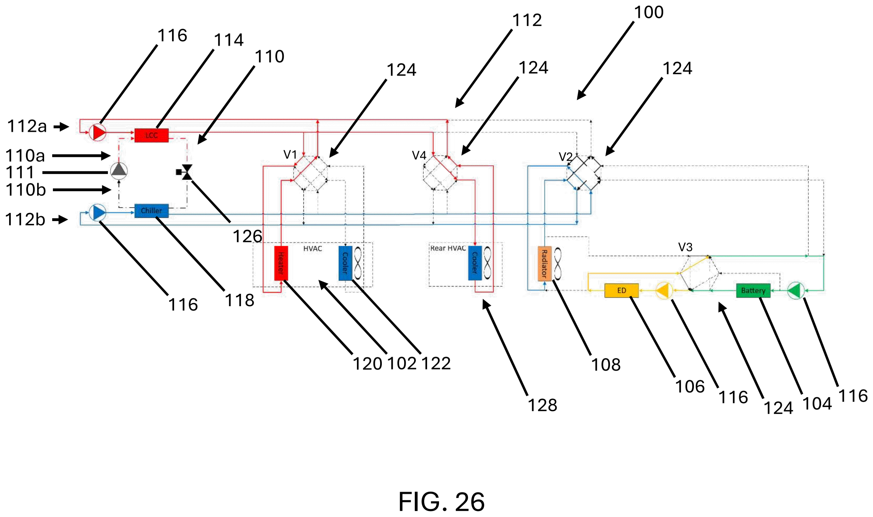

FIG. 26 illustrates a cabin heat up mode with heat pumping from ambient.

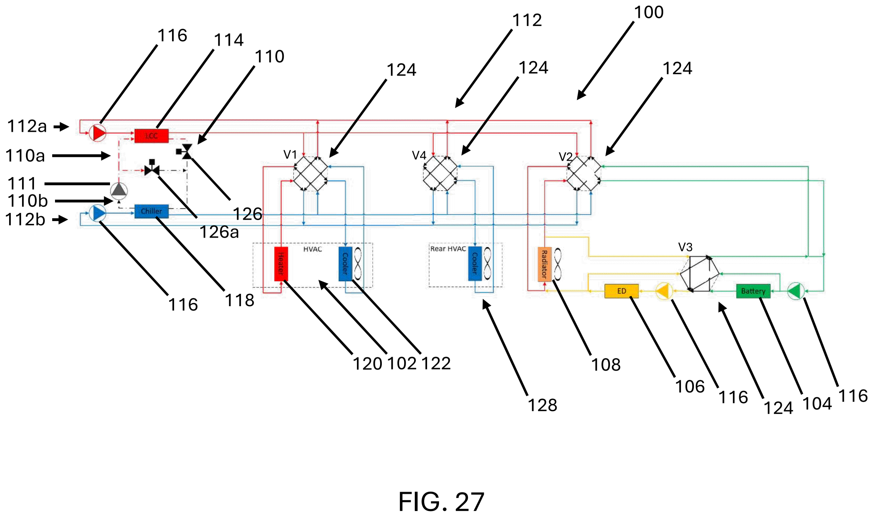

FIG. 27 illustrates a refrigerant lossy configuration with the rear HVAC system 128.

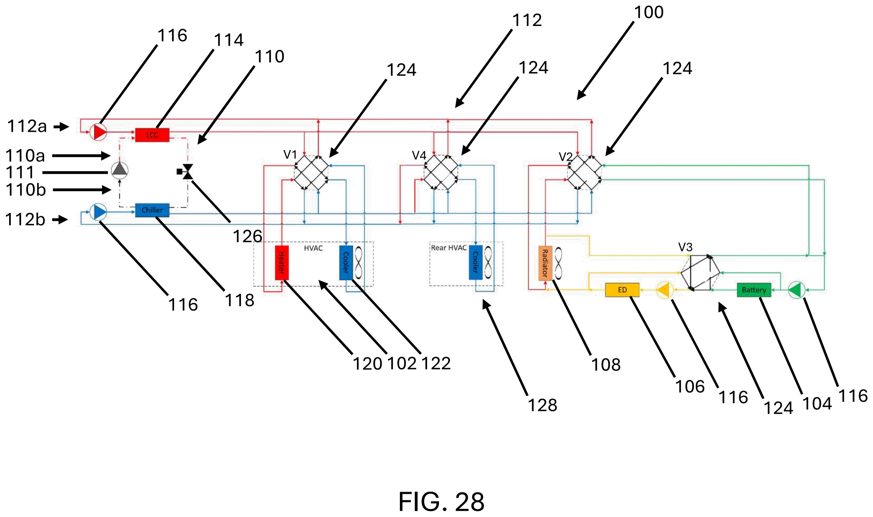

FIG. 28 illustrates a coolant lossy configuration with the rear HVAC system 128.

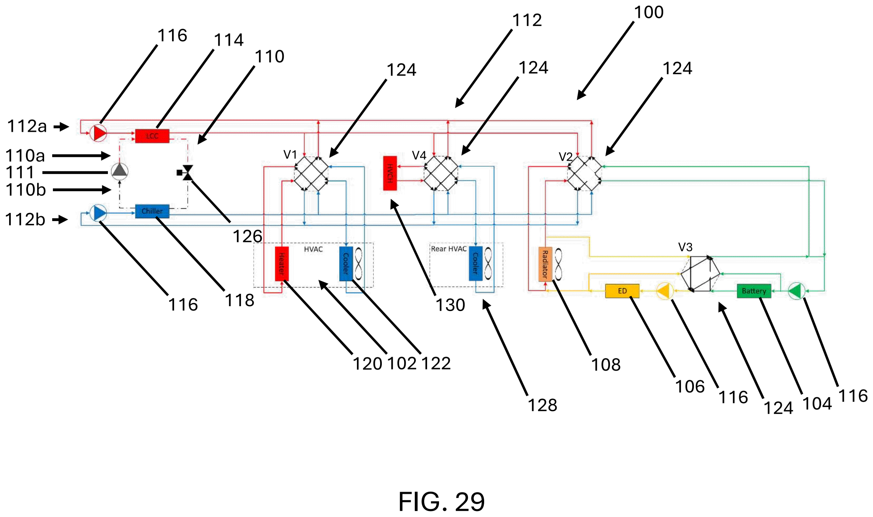

FIG. 29 illustrates the use of the HVCH 130 with the rear HVAC system.

It will be readily apparent to those of ordinary skill in the art that the thermal management system 100 of the present disclosure is disposed in a vehicle 50 (FIG. 1) in all embodiments, and may be controlled by a controller 75 (FIG. 1) disposed in the vehicle 50 and utilizing any arrangement of processors, memories, sensors, and actuators, well known to those of ordinary skill in the art, to control the operation of the thermal management system responsive to a sensed environmental state, such as ambient temperature, humidity, etc., a sensed vehicle operational state, and/or a sensed user vehicle setting.

Although the present disclosure is illustrated and described with reference to specific embodiments and examples, it will be readily apparent to those of ordinary skill in the art that other embodiments and examples may perform similar functions and/or achieve like results. All such equivalent embodiments and examples are within the spirit and scope of the present disclosure, are contemplated thereby, and are intended to be covered by the following non-limiting claims for all purposes.

## Claims

1. A thermal management system (100) for a vehicle, the thermal management system comprising:
a refrigerant loop (110) comprising a liquid cooled condenser (110a/114) and a coolant chiller (110b/118);
a coolant loop (112) comprising a hot circuit (112a) and a cold circuit (112b);
wherein the liquid cooled condenser and the coolant chiller of the refrigerant loop are coupled between the hot circuit and the cold circuit of the coolant loop;
a first multi-way valve assembly (V1) coupling a heating, ventilation, and air conditioning (HVAC) system (102) comprising a first heat exchanger/heater (120) and a second heat exchanger/cooler (122) to the hot circuit and the cold circuit of the coolant loop;
a second multi-way valve assembly (V2) coupling a battery system (104), an electric drive (ED) system, and an ambient heat exchanger to the hot circuit and the cold circuit of the coolant loop; and
a third multi-way valve assembly (V3) coupling the battery system, the electric drive system, and the ambient heat exchanger to one another.

2. The thermal management system of claim 1, further comprising a controller (75) operable for controlling operation of the first multi-way valve assembly, the second multi-way valve assembly, and the third multi-way valve assembly responsive to a sensed environmental state, a sensed vehicle operational state, and/or a sensed user vehicle setting.

3. The thermal management system of claim 1, wherein one or more of the first multi-way valve assembly, the second multi-way valve assembly, and the third multi-way valve assembly is a 6-way valve assembly.

4. The thermal management system of claim 1, further comprising an electrical valve disposed between the liquid cooled condenser and the coolant chiller of the refrigerant loop, forming a hot gas bypass line in the refrigerant loop making the thermal management system a refrigerant lossy thermal management system.

5. The thermal management system of claim 1, further comprising a high voltage coolant heater (HVCH) installed in one or more of the hot circuit of the coolant loop, the cold circuit of the coolant loop, the battery system, and the ED system.

6. The thermal management system of claim 1, further comprising a coolant thermal bypass between the liquid cooled condenser in a high pressure side of the refrigerant loop and the chiller in a low pressure side of the refrigerant loop in a coolant lossy configuration.

7. The thermal management system of claim 1, further comprising a fourth multi-way valve assembly supporting a rear HVAC system.

8. The thermal management system of claim 7, further comprising the fourth multi-way valve assembly supporting the rear HVAC system and enabling coolant lossy functionality on a coolant side of the coolant loop using a compressor or the ED system.

9. The thermal management system of claim 7, further comprising the fourth multi-way valve assembly supporting the rear HVAC system supplying heating to a vehicle cabin via both the HVAC system and the rear HVAC system.

10. The thermal management system of claim 1, wherein the thermal management system is operated in one of a plurality of modes in one or more of a base configuration, with a hot gas bypass line in the refrigerant loop, in a refrigerant lossy configuration, in a coolant lossy configuration, and a fourth multi-way valve assembly supporting a rear HVAC system.

11. A method of providing a thermal management system for a vehicle, the method comprising:
providing a refrigerant loop comprising a liquid cooled condenser and a coolant chiller;
providing a coolant loop comprising a hot circuit and a cold circuit;
wherein the liquid cooled condenser and the coolant chiller of the refrigerant loop are coupled between the hot circuit and the cold circuit of the coolant loop;
providing a first multi-way valve assembly coupling a heating, ventilation, and air conditioning (HVAC) system comprising a first heat exchanger/heater and a second heat exchanger/cooler to the hot circuit and the cold circuit of the coolant loop;
providing a second multi-way valve assembly coupling a battery system, an electric drive (ED) system, and an ambient heat exchanger to the hot circuit and the cold circuit of the coolant loop; and
providing a third multi-way valve assembly coupling the battery system, the electric drive system, and the ambient heat exchanger to one another.

12. The method of claim 11, further comprising providing a controller operable for controlling operation of the first multi-way valve assembly, the second multi-way valve assembly, and the third multi-way valve assembly responsive to a sensed environmental state, a sensed vehicle operational state, and/or a sensed user vehicle setting.

13. The method of claim 11, wherein one or more of the first multi-way valve assembly, the second multi-way valve assembly, and the third multi-way valve assembly is a 6-way valve assembly.

14. The method of claim 11, further comprising providing an electrical valve disposed between the liquid cooled condenser and the coolant chiller of the refrigerant loop, forming a hot gas bypass line in the refrigerant loop making the thermal management system a refrigerant lossy thermal management system.

15. The method of claim 11, further comprising operating the thermal management system is operated in one of a plurality of modes in one or more of a base configuration, with a hot gas bypass line in the refrigerant loop, in a refrigerant lossy configuration, in a coolant lossy configuration, and a fourth multi-way valve assembly supporting a rear HVAC system.
